(19) Europäisches Patentamt
European Patent Office
Office européen des brevets

(11) **EP 2 517 105 B1**

(12) **EUROPÄISCHE PATENTSCHRIFT**

(45) Veröffentlichungstag und Bekanntmachung des Hinweises auf die Patenterteilung:
**10.10.2018   Patentblatt 2018/41**

(21) Anmeldenummer: **10795629.4**

(22) Anmeldetag: **20.12.2010**

(51) Int Cl.:
**G06F 9/445** *(2018.01)*

(86) Internationale Anmeldenummer:
**PCT/EP2010/007803**

(87) Internationale Veröffentlichungsnummer:
**WO 2011/085789 (21.07.2011 Gazette 2011/29)**

(54) **VERFAHREN ZUM KOMPRIMIEREN VON BEZEICHNERN**

METOD FOR COMPRESSING IDENTIFIERS

METHOD POUR COMPRIMER DES IDENTIFIANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2009   DE 102009059939**

(43) Veröffentlichungstag der Anmeldung:
**31.10.2012   Patentblatt 2012/44**

(73) Patentinhaber: **Giesecke+Devrient Mobile Security GmbH**
**81677 München (DE)**

(72) Erfinder:
• **MEDGYESI, Andreas**
**80801 München (DE)**
• **PHAM NGUYEN, Huy**
**80937 München (DE)**

(56) Entgegenhaltungen:
EP-A2- 0 943 989       JP-A- 2000 259 425
US-A- 5 640 564        US-B1- 6 750 791

• **T. LINDHOLM; F. YELLIN: "Chapter 4: The class file format", THE JAVA VIRTUAL MACHINE SPECIFICATION (2ND EDITION), Nr. Chapter 4, 1999, Seiten 93-174, XP007918079,**

**EP 2 517 105 B1**

## Beschreibung

Die Erfindung betrifft ein Verfahren zum Komprimieren von Bezeichnern von Programmcodeelementen in einem tragbaren Datenträger, ein Verfahren zum Aufrufen von komprimierten Bezeichnern, einen tragbaren Datenträger und einen Halbleiterchip mit einem Speicherbereich zum Ablegen der komprimierten Bezeichner.

Chipkarten mit Mikroprozessor, auch als Smart Card bezeichnet, werden bereits heute und künftig voraussichtlich noch verstärkt bei einer Vielzahl von Anwendungen eingesetzt, beispielsweise bei Mobilgeräten wie z.B. Mobiltelefonen als SIM-Karten bzw. USIM-Karten, als Bankkarten oder elektronische Geldbörsen im elektronischen Zahlungsverkehr, als Gesundheitskarten für Versicherte von Krankenversicherungen und Ärzte, als Bürgerkarten, oder als Multiapplikationskarten, in denen mehrere der genannten oder anderer Funktionalitäten implementiert sind.

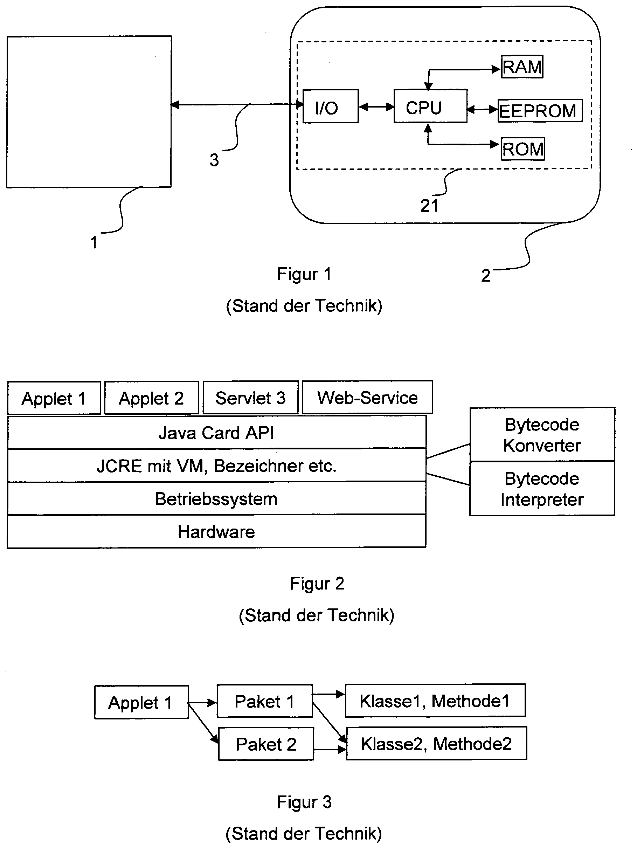

Ein Halbleiterchip (21) für die Chipkarte hat eine Mehrzahl von Speicherbereichen, nämlich den nichtflüchtigen, nur einmal beschreibbaren ROM, den nichtflüchtigen, wiederbeschreibbaren EEPROM und den flüchtigen, wiederbeschreibbaren RAM. Alternativ können Teile des ROM und/oder des EEPROM durch Flash-Speicher ersetzt sein. In der Figur 1 sind diese Zusammenhänge dargestellt. Eine Chipkarte 2 steht hierbei in einer Kommunikationsverbindung 3 mit einem Endgerät 1.

Bei der Herstellung des Halbleiterchips wird zunächst durch den Chiphersteller ein Programmcodeanteil im ROM implementiert. Dieser Programmcodeanteil wird auch als ROM-Maske bezeichnet und enthält vor allem das Betriebssystem der Chipkarte. Die ROM-Maske bezieht der Chipkartenhersteller vom Chiphersteller. Die Komplettierung der Chipkarte wird in der Regel ebenfalls vom Chipkartenhersteller durchgeführt, wozu Ergänzungen zum Betriebssystem und Anwendungen des Chipkartenherstellers in den EEPROM der Chipkarte implementiert werden. Nach erfolgter Komplettierung ist der Halbleiterchip fertig zur Herausgabe an den Kunden.

Um plattformunabhängige und gut gegeneinander abgesicherte Anwendungen zu erstellen, eignen sich objektorientierte Programmiersprachen, insbesondere Java™ der Firma Sun Microsystems Inc., sehr gut. Alternativ zu Java™ ist auch C# als Programmiersprache geeignet. Die Laufzeitumgebungen objektorientierter Programmiersprachen sind jedoch in der Regel zu umfangreich, um sie ohne Weiteres in einen Smart Card Chip implementieren zu können.

Die Java Card™ Technologie der Firma Sun Microsystems Inc. stellt eine abgewandelte Java Technologie für Laufzeitumgebungen mit beschränkten Systemressourcen dar, die sich auch für Chipkarten eignet. Diese Technologie ist zum Beispiel in dem Dokument "Java Card™ Runtime Environment, kurz JCRE, Specification" in der Version 3 dargelegt. Es wird angemerkt, dass die Erfindung nicht auf die aktuelle und vergangene Versionen der Spezifikation beschränkt, sondern vielmehr auch für zukünftige Versionen gültig ist. Ein prinzipieller Aufbau der Java Card™ Technologie ist in der Figur 2 gezeigt, die in der Figurenbeschreibung näher beschrieben wird. Die im Halbleiterchip einer Java Card vorgesehene Laufzeitumgebung gemäß der JCRE Spezifikation umfasst zumindest die virtuelle Java Card Maschine, kurz JCVM und in einem entsprechenden Speicherbereich abgelegten Bezeichnern sowie ggf. noch weitere Komponenten.

Im Zusammenhang mit der Erfindung ist ein Bezeichner ein Identifikator, mit welchem ein Element beispielsweise eine Variable, eine Klasse, eine Methode, eine Parameterliste, eine Funktion oder ein Paket eines Programmcodes gekennzeichnet ist. Zur Vermeidung von Kollisionen beim Aufruf dieses Elements muss ein Bezeichner innerhalb eines Namensraums eindeutig sein, d.h. er muss kollisionsresistent sein. Objektorientierte Programmiersprachen unterscheiden einfache und vollqualifizierte Bezeichner. Ein Compiler übersetzt einfache Bezeichner, die in der Regel als Programmierhilfen dienen, immer in vollqualifizierte Bezeichner. Ein vollqualifizierter Bezeichner ist hierarchisch aufgebaut, wobei einzelne Teile durch einen Punkt getrennt sind. Bei Java gibt es eine Namensgebung für Bezeichner. Obwohl Teile der Bezeichner weiter unten in der Namensgebungshierarchie angeordnet sind, stehen sie semantisch in keiner Beziehung zu den Teilen der Bezeichner, die weiter oben in der Hierarchie stehen.

In der Chipkarte werden die Bezeichner gemäß der Spezifikation als eine Zeichenkette, sogenannten strings, von Zeichen des Datentyps character, kurz char, abgelegt.

Der Speicherbereich für das Betriebssystem einer Chipkarte ist in der Regel sehr klein, wovon nur ein geringer Teil für einen Benutzer verfügbar ist. Chipkartenhersteller sind daher stets bemüht, den für den Benutzer verfügbaren Teil des Speicherbereichs zu erhöhen. Um dem Benutzer soviel wie möglich Speicherbereich im EEPROM oder im Flash-Speicher zur Verfügung stellen zu können, muss daher das Betriebssystem der Chipkarte derart ausgestaltet sein, dass möglichst wenig Speicher belegt wird.

Anwendungen sind in der Regel in Form von Applets in der Chipkarte implementiert. Als Anwendungen gibt es sogenannte Preloaded Applets, die vor oder bei der Komplettierung in den Chipkartenchip implementiert werden. Weiter gibt es Postloaded Applets, die nach erfolgter Komplettierung in den Chipkartenchip geladen werden, in der Regel durch den Abnehmer oder Kunden, beispielsweise ein Kreditinstitut oder eine Behörde. Hier ist der große Vorteil der Java Card™ Technologie zu sehen, denn die Applets können plattformunabhängig auf die Chipkarte übertragen werden, so dass die auf der jeweiligen Chipkarte vorliegende Hardware bei Implementierung und Ausführung des Applets keine Rolle mehr spielt. Während in der Java Card 2.x Applets geladen werden, werden darüber hinaus in der Java Card 3.0 sogenannte Servlets und Web-Services geladen. Im Zusammenhang mit der Erfindung wird kein Unterschied zwischen Applets, Servlets, Web-Services vorgenommen, es wird allgemein von Applikationen/ Anwendungen gesprochen.

Die Erfindung ist nicht auf eine Version, beispielsweise der aktuellen Version Java Card 3.0, des Standards beschränkt, vielmehr kann das vorgeschlagene Komprimierungsverfahren auch auf älteren und zukünftigen Java Standards angewendet werden. In der Version des Java Card Standards 2.x ist der Java Programmcode einer Anwendung in Form von Java Paketen, sogenannten Java packages, in der Chipkarte abgelegt. Ein Java Paket besteht wiederum aus mehreren Klassendefinitionen. Zusätzlich können auch Schnittstellen, sogenannte Interfaces, im Java Paket definiert sein. Dabei ist der Java Programmcode auf mehrere Übersetzungseinheiten aufgeteilt, von denen jede in einer eigenen Datei abgelegt ist. Jede einzelne Übersetzungseinheit definiert als erstes das Paket, dem sie angehört und importiert dann eine oder mehrere Klassen aus anderen Java Paketen. Zusätzlich können auch Schnittstellen aus anderen Java Paketen importiert werden. Abschließend werden in dem Java Paket eine oder mehrere Klassen und eventuell zusätzlich Schnittstellen definiert. Sozusagen greift ein Java Paket auf ein anderes Java Paket zurück. Durch diese Maßnahme wird verhindert, dass Pakete, Klassen und/oder Methoden auf einer Chipkarte mehrfach existieren, sodass an dieser Stelle bereits Speicherplatz auf der Chipkarte eingespart wird.

Dass ein neu in eine Java Card geladenes Paket tatsächlich auf ein vorbestimmtes anderes Paket zugreifen und dessen Programmcode nutzen kann, wird durch das Linken eingerichtet. Dabei lädt das neu geladene Paket Linkinformation (z.B. eine Adresse) aus einer Export-Komponente des anderen Pakets in eine eigene Import-Komponente. Beispielsweise wird beim Linken ein Token, d.h. eine aus einer "import"-Referenz erzeugte Nummernreferenz, in der Import-Komponente des neuen Pakets durch eine Adresse aus der Export-Komponente des anderen Pakets ersetzt. Hierdurch wird der Token (die Referenz) mit dem Benutzungswunsch durch eine tatsächliche Adress-Verknüpfung zwischen den beiden Paketen ersetzt. Die Verknüpfung und damit die tatsächliche Benutzungsmöglichkeit kann nur eingerichtet werden, wenn dem neu geladenen Paket die Export-Komponente des anderen Pakets, dessen Programmcode das neue Paket nutzen will, zur Verfügung steht.

Die Export-Komponenten aller Pakete, die in einer Java Card implementiert sind, oder eine vorbestimmte Teilmenge aller dieser Export-Komponenten, sind in der Export-Datei zusammengefasst. Wird vor der Komplettierung der Java Card ein zusätzliches (neues) Paket auf die Chipkarte übertragen, wird es unter Verwendung des Linkers und der Export-Datei gelinkt.

Die Strukturierung des Programmcodes in Pakete ist auch nach der Übertragung auf den tragbaren Datenträger beibehalten.

Wie eingangs erwähnt, werden bei der Java Card Technologie Bezeichner für ausführbare Programmcodeelemente in der Chipkarte abgelegt, wobei dabei der Bezeichner wiederum das Paket und den Klassennamen angibt, indem der ausführbare Programmcode abgelegt ist. Die Bezeichner sind dabei als Zeichenkette, sogenannten strings, im Datentyp character, kurz char, abgelegt. Jedes char Zeichen der Zeichenkette benötigt dabei 8 Bit im Speicherbereich der Chipkarte. Ein Ansatzpunkt, um Speicherplatz im Speicherbereich der Chipkarte einzusparen ist daher durch effektives Ablegen der Bezeichner auf der Chipkarte erzielbar.

In der JP 2000259425 A wird ein Verfahren zum Komprimieren von Bezeichnern angegeben. Die Bezeichner sind zunächst als string aus char abgelegt und werden hinsichtlich redundanter Zeichenketten analysiert. Jede Zeichenkette eines ersten Bezeichners, die vollständig in einer Zeichenkette eines zweiten Bezeichners enthalten ist, wird nicht separat abgelegt. Stattdessen wird der erste Bezeichner derart abgelegt, dass das erste char-Zeichen des ersten Bezeichners an der Zeichenkette des zweiten Bezeichners markiert wird. Der erste Bezeichner wird verworfen und es wird lediglich die Markierung und die Länge der Zeichenkette des ersten Bezeichners im Speicherbereich der Chipkarte abgelegt.

Eine derartige Komprimierung bedeutet zunächst, dass zumindest eine Zeichenkette eines Bezeichners vollständig abgelegt ist. Jeder Bezeichner eines Java Pakets, einer Klasse bzw. einer Methode, der nicht mindestens einmal zuvor als Zeichenkette von char abgelegt worden ist, muss auf die herkömmliche Art im Speicherbereich der Chipkarte abgelegt werden. Dadurch ist dieses Komprimierungsverfahrens nicht effektiv, da viel Platz für die Bezeichner verwendet wird.

Der Erfindung liegt daher die Aufgabe zugrunde, die Bezeichner effektiver, das heißt platzsparender auf der Chipkarte abzulegen. Der Anteil der redundanten Informationen in der Zeichenkette der Bezeichner soll daher wesentlich reduziert werden. Darüber hinaus sollen Zugriffszeiten und Methodenaufrufzeiten durch die Verwendung komprimierte Bezeichner minimiert werden. Es ist eine Selbstverständlichkeit, dass dabei Aufrufe der Bezeichner jederzeit eindeutig bleiben müssen.

Erfindungsgemäß wird ein Verfahren zum Komprimieren eines Bezeichners gemäß Anspruch 1 vorgeschlagen.

Eine Komprimierungsfunktion ist hier eine Funktion, durch deren Anwendung auf einen Bezeichner der Speicherplatzbedarf des Bezeichners verringert wird. Somit weist der komprimierte Bezeichner nach Anwenden der Komprimierungsfunktion einen geringeren Platzbedarf in der Chipkarte auf.

Das erfindungsgemäße Verfahren wendet eine Komprimierungsfunktion typabhängig an. Dadurch ist in vorteilhafter Weise erreicht, dass die Komprimierungsfunktion für den jeweiligen Typ eine effiziente Speicherplatzeinsparung erreicht. Die Art des Bezeichnertyps sowie die Unterschiede zwischen den einzelnen Bezeichnern werden in der Figurenbeschreibung erläutert. Die komprimierten Bezeichner werden zusätzlich verwendet, um Vergleiche durchzuführen, wodurch beispielsweise überprüft wird, ob ein bestimmter Bezeichner bereits auf der Chipkarte vorhanden ist. Durch die Komprimierung müssen keine aufwendigen Zeichenkettenvergleiche, auch string-compares genannt, durchgeführt werden, sondern es können wesentlich einfachere Such- und Vergleichsalgorithmen angewendet werden. Insbesondere ist eine binäre Suche innerhalb der komprimierten Bezeichner anzuwenden. Somit ist zusätzlich zur Speichereinsparung auch die Zugriffszeit auf ein mittels des Bezeichners aufrufbares Programmcodeelement verringert.

Bevorzugt wird eine erste Komprimierungsfunktion auf den ersten Bezeichnertyp angewendet. Weiterhin bevorzugt ist eine zweite Komprimierungsfunktion auf den zweiten Bezeichnertyp anzuwenden. Der ersten und der zweiten Komprimierungsfunktion sind insbesondere verschiedene mathematische Funktionen zu Grunde gelegt. Diese bezeichnertypabhängige Anwendung von unterschiedlichen Komprimierungsfunktionen führt in vorteilhafter Weise dazu, dass der jeweilige Bezeichnertyp, hinsichtlich des Programmcodeelements, welches durch ihn aufgerufen wird, optimal komprimiert wird.

Wie eingangs beschrieben, ist ein Bezeichner hierarchisch strukturiert und aus mehreren Teilen aufgebaut, wobei die Teile untereinander mit einem Punkt voneinander getrennt sind. Ein hierarchischer Aufbau der Bezeichner wird unter anderem von Java und C# verwendet. Die Bezeichner können aus einer unterschiedlichen Anzahl von Teilen von Bezeichnern aufgebaut sein, wobei die einzelnen Bezeichnerteile unterschiedliche Bezeichnertypen sein können.

In einer besonderen Ausgestaltung ist der Bezeichner gemäß der Namensgebungsvereinbarung der Java Language Specification aufgebaut. Durch diese Namensgebung wird verhindert, dass zwei Bezeichner unter *dem gleichen Namen existieren. Weiterhin schreibt die Namenskonvention vor, wie einzelne Bezeichner erstellt werden müssen, sodass weit verbreitete Bezeichner einen einheitlichen Namensraum beschreiben. Dadurch können Bezeichner separat, einfach und automatisch in eine Chipkarte installiert und dort katalogisiert werden. Der Aufbau und weitere Beispiele für Bezeichner können der Figurenbeschreibung entnommen werden. Die Namensgebungsvereinbarung sieht weiterhin vor, dass der letzte Bezeichnerteil eine Klasse bezeichnen kann. Weiterhin sieht die Namensvereinbarung vor, dass Bezeichner für Methoden und Parameterlisten in getrennten Zeichenketten angegeben sind. Bevorzugt wird zumindest für einen Teil des ersten Bezeichnertyps eine verlustbehaftete Komprimierungsfunktion angewendet. Dies kann insbesondere eine Hashfunktion sein. Die verlustbehaftete Komprimierungsfunktion komprimiert zumindest für eine Teilmenge des ersten Bezeichnertyps eindeutig, d.h. kollisionsresistent. Die Anforderungen an die verlustbehaftete Komprimierungsfunktion sind gering, diese Funktion muss die Kollisionsresistenz der komprimierten Bezeichner sicherstellen, sodass bei der Komprimierung der Fall ausgeschlossen ist, dass unterschiedliche Bezeichner nach dem Komprimieren gleich sind. Ein späterer Aufruf des Bezeichners würde sonst die Funktion der Chipkarte beeinträchtigen.

Verlustbehaftet in diesem Zusammenhang heißt, dass ausgehend von den komprimierten Bezeichnern nicht auf die ursprüngliche Zeichenkette aus char-Zeichen des übertragenen Bezeichners zurückgeschlossen werden kann. Dies ist insbesondere dann möglich, wenn eine konstante Menge des Bezeichners des ersten Typs komprimiert wird, sodass ausgeschlossen ist, dass weitere Bezeichner dieses Bezeichnertyps hinzukommen oder einzelne Bezeichner dieses Bezeichnertyps überschrieben oder ausgetauscht werden.

Um eine kollisionsfreie verlustbehaftete Komprimierung durchzuführen genügt es, eine Teilmenge von zu erwartenden Bezeichnern vorherzusagen, die mit einer möglichen Wahrscheinlichkeit zu irgendeinem Zeitpunkt auf die Chipkarte übertragen werden. Für diese Teilmenge wird nun eine verlustbehaftete Komprimierungsfunktion gesucht, die kollisionsresistente komprimierte Bezeichner erzeugt. Werden Bezeichner übertragen, die nicht in der Teilmenge enthalten sind, erfolgt entweder keine oder eine verlustfreie Komprimierung auf der Chipkarte.

Ansonsten könnte der Fall auftreten, dass ein Bezeichner verlustbehaftet komprimiert worden ist und im Zuge der Installation einer Anwendung überschrieben wird. Eine Kollision bei Aufruf des Bezeichners wäre die Folge, da nun zwei ursprünglich unterschiedliche Bezeichner durch die verlustbehaftete Komprimierungsfunktion auf einen identischen Wert abgebildet wurden. Der Aufruf des gewünschten Programmcodeelements könnte somit nicht mehr eindeutig aufgelöst werden, schlussfolgernd wäre ein sicherer Betrieb der Chipkarte ausgeschlossen.

Ein erster Typ von Bezeichner ist beispielsweise ein Bezeichner, durch den Application-Programming-Interface, kurz API, Funktionen als ausführbare Programmcodeelemente aufgerufen werden. API Funktionen sind sogenannte Standard-Bibliotheksfunktionen, die vor oder bei der Komplettierung durch den Chipkartenhersteller in den Chipkartenchip implementiert werden. Diese API Funktionen sind Bestandteil der zu implementierenden ROM-Maske oder im EEPROM oder Flash-Speicher hinterlegt.

Ein erster Bezeichnertyp kann auch nur eine Teilmenge der API Funktionen umfassen. Dadurch wird erreicht, dass die komprimierten Bezeichner speicherbedarfsoptimiert sind. Durch die geringere Anzahl an Bezeichnern werden zusätzlich die komprimierten Bezeichner kürzer. Dies erspart wiederum Zugriffszeit.

Betrifft der erste Typ von Bezeichner die API Funktionen, so ist sichergestellt, dass die Anzahl der Funktionen konstant ist, da die Java API gemäß dem jeweils zugrunde liegenden Java Standard nicht um neue Funktionen ergänzt werden darf. Alternativ ist es auch möglich, dass nur eine Teilmenge der API Funktionen als erster Bezeichnertyp verlustbehaftet komprimiert wird. Je größer die Teilmenge ist, desto aufwendiger wird die Komprimierung und/oder entsprechend groß werden die komprimierten Bezeichner. Eine Auswahl der Teilmenge kann nach Anzahl der API Funktionen, nach gewünschtem Komprimierungsgrad, nach Häufigkeit des Zugriffs auf diese Teilmenge etc. getroffen werden.

Allgemein gilt für die Anmeldung, dass mit dem Verfahren zum Komprimieren vorrangig eine Speicherplatzeinsparung erzielt werden soll. Durch geschickte Wahl einer Teilmenge an Bezeichnern eines Bezeichnertyps kann darüber hinaus die Zugriffszeit verkürzt werden. Parameter für die Wahl der Komprimierungsfunktion sind demnach Anzahl der Bezeichner, Häufigkeit für deren Aufruf, wird der Bezeichner erneut übertragen (und dadurch ggf. überschrieben) oder nicht.

Welcher Teil eines Bezeichners verlustbehaftet komprimiert wird, kann vom Bezeichner selbst abhängen. Es muss sich also nicht statisch um einen bestimmten Teil des Bezeichners handeln, vielmehr darum, eine möglichst effiziente (im Hinblick auf Speicherplatz oder Zugriffszeit) verlustbehaftete Komprimierung zu finden.

Bevorzugt wird eine zweite Komprimierungsfunktion auf den zweiten Bezeichnertyp angewendet. Diese zweite Komprimierungsfunktion ist in einer besonderen Ausgestaltung eine verlustfreie Komprimierungsfunktion. Somit kann der Speicherbedarf des zweiten Typs von Bezeichnern reduziert werden, es ist aber sichergestellt, dass die Bezeichner aus den komprimierten Bezeichnern rekonstruiert werden können. Dies ist insbesondere dann wichtig, wenn der Bezeichner einem Bezeichnertyp angehört, der nachträglich überschrieben werden kann. In einem solchen Fall muss sichergestellt bleiben, dass der komprimierte Bezeichner kollisionsresistent ist und auch ein nachträglich übertragener Bezeichner kollisionsresistent abgelegt werden kann.

Obige Bedingungen an die erste und die zweite Komprimierungsfunktion bedeuten, dass der Komprimierungsgrad der ersten Komprimierungsfunktion gegenüber der zweiten Komprimierungsfunktion wesentlich höher sein kann, um einen Großteil redundanter Informationen aus den Bezeichnern entfernen zu können.

Die Bezeichner des zweiten Bezeichnertyps sind bevorzugt in Listenform abgelegt. Dabei werden eine erste Liste und eine zweite Liste gebildet. Die erste Liste besteht aus Einzelwörtern des Bezeichners. Diese Einzelwörter sind als Zeichenkette von char abgelegt. Alternativ werden nicht die Einzelwörter als Zeichenketten, sondern die Hashwerte der Einzelwörter abgelegt. Die zweite Liste besteht aus der Anzahl der Teile des Bezeichners und Indizes zu den korrespondierenden Teilen des Bezeichners der ersten Liste.

Da eine Vielzahl von Bezeichnern auf der Chipkarte zumindest teilweise übereinstimmende Zeichenketten aufweisen werden die Bezeichner nach dem oben beschriebenen Verfahren in einer Listenform abgelegt. Durch ein derartiges Ablegen kann ein Großteil ein Speicherbedarf der Bezeichner eingespart werden.

Da die Bezeichner zumeist im letzten Teil eine Klasse bezeichnen, ist erfindungsgemäß vorgesehen, diesen letzten Teil verlustfrei zu komprimieren. Dadurch ist der Aufruf dieses komprimierten Bezeichners weiterhin eindeutig.

Ein komprimierter Bezeichner kann ein Paket, eine Methoden, eine Klasse und/oder eine Parameterliste als Programmcodeelement aufrufen. Dies sind die häufigsten Bezeichner die in der Chipkarte abgelegt werden müssen, sodass die Komprimierung dieser Bezeichner besonders viel Speicherbereich auf der Chipkarte einspart. Der letzte Teil des Bezeichners bezeichnet dabei möglicherweise eine Klasse, wohingegen die übrigen Teile des Bezeichners das Paket bezeichnen. Methoden und Parameterlisten können zunächst in Zeichenketten abgelegt sein, die nicht zu den Paketen und Klassen gehören.

In vorteilhafter Weise wird durch das Komprimierungsverfahren erreicht, dass die Chipkarte weiterhin mit dem Java Standard übereinstimmt. Das heißt, es werden weiterhin Dateien auf die Chipkarte nach dem Java Standard übertragen. Die Erfindung ist nicht auf eine Version, beispielsweise der aktuellen Version Java Card 3.0, des Standards beschränkt, vielmehr kann das vorgeschlagene Komprimierungsverfahren auch auf älteren und zukünftigen Java Standards angewendet werden. Das erfindungsgemäße Komprimieren erfolgt auf der Chipkarte, wobei die komprimierten Bezeichner abgelegt werden. Die empfangenen Bezeichner können nach erfolgreicher Komprimierung verworfen werden, da aufgrund der typabhängigen Komprimierung erreicht ist, dass alle Bezeichner kollisionsresistent abgelegt sind. Insbesondere können Teile des Bezeichners eines Typs verlustbehaftet komprimiert werden.

Weitere Anwendungen werden entweder zur Komplettierung der Chipkarte oder gemäß Benutzerwünschen gemäß Java Card Standard auf den tragbaren Datenträger nachträglich übertragen. Dabei werden ebenfalls Bezeichner übertragen. Diese nachträglich übertragenen Bezeichner werden kollisionsresistent zu bereits komprimierten Bezeichnern komprimiert. Auf diese Weise können plattformunabhängig Java Anwendungen nachgeladen werden, ohne Bezeichner doppelt abzulegen.

Weiterhin wird erfindungsgemäß ein Verfahren zum Aufrufen eines komprimierten Bezeichners in dem tragbaren Datenträger vorgeschlagen. Mit diesem Verfahren werden nunmehr ausschließlich die komprimierten Bezeichner zum Programmcodeelementaufruf benötigt. Die übertragenen Bezeichner können nach der Komprimierung verworfen werden. Auf diese Art ist erheblich Speicherbedarf der Bezeichner reduziert.

Ein Programmcodeelement kann wiederum einen Bezeichner eines Programmcodeelements aufweisen. Dieser Bezeichner in dem Programmcodeelement ist ebenfalls komprimiert abgelegt.

Weiterhin ist ein tragbarer Datenträger mit Verwendung des Komprimierungsverfahrens vorgeschlagen. Als tragbarer Datenträger wird insbesondere eine Java Card als Chipkarte vorgeschlagen. Alternativ ist auch ein Sicherheitsmodul, ein Token oder ein anders gearteter Datenträger mit Verwendung des Verfahrens vorstellbar und vom Erfindungsgedanken nicht ausgeschlossen.

Schließlich wird ein Halbleiterchip für einen tragbaren Datenträger, insbesondere eine Java Card vorgeschlagen. Der Halbleiterchip weist unter anderem eine zentrale Recheneinheit, einen flüchtigen und einen nichtflüchtigen Speicherbereich auf. In der zentralen Recheneinheit ist eine Komprimierungseinheit vorgesehen. Die Komprimierungseinheit komprimiert die Bezeichner gemäß dem beschriebenen Komprimierungsverfahren. Die komprimierten Bezeichner werden im flüchtigen und/oder nichtflüchtigen Speicherbereich des Datenträgers abgelegt.

Es zeigen:

Figur 1      Ein beispielhaftes Blockschaltbild eines Halbleiterchips einer Chipkarte gemäß Stand der Technik;

Figur 2      Eine skizzenhafte Softwarestruktur einer Java Implementierung auf einer Java Card gemäß dem Stand der Technik;

Figur 3      Eine Darstellung über eine mögliche Verzweigung von Bezeichnern innerhalb einer Java Anwendung nach dem Stand der Technik;

Figur 4      Aufbau eines Bezeichners gemäß Stand der Technik;

Figur 5      Liste mit beispielhaften Bezeichnern;

Figur 6      Ein Blockschaltbild eines erfindungsgemäßes Ausführungsbeispiel eines Halbleiterchips in einer Chipkarte;

Figur 7      Tabellen zur Gegenüberstellung von übertragenen und gemäß einem erfindungsgemäßen Verfahren komprimierten Bezeichnern;

Figur 8      Liste mit Bezeichnern, alternativ zu Figur 5;

Figur 9      Hashwerte über einen Auszug von Bezeichnerteilen der Figur 8;

Figur 10      Eine Liste mit Indizes und Länge des Wortes zum komprimierten Ablegen auf einer Chipkarte;

Figur 11      Liste komprimierter Bezeichner gemäß Figur 8, 9 und 10;

Figur 1 zeigt ein Blockschaltbild eines Halbleiterchips 21 einem tragbaren Datenträger, hier als Chipkarte 2 ausgestaltet, wie es im Stand der Technik vorzufinden ist. Dabei ist eine Eingabe/Ausgabeeinheit I/O mit einer zentralen Recheneinheit CPU verbunden. Mit der zentralen Recheneinheit ist weiterhin ein Speicherbereich verbunden, wobei der Speicherbereich aus einem nichtflüchtigen Speicherbereich, ROM, EEPROM sowie einem flüchtigen Speicherbereich RAM besteht. Im RAM befinden sich kurzlebige flüchtige Daten, wohingegen im ROM das Betriebssystem eingebrannt ist. Im EEPROM sind Daten abgelegt, die über mehrere Kartenaktivierungen hinaus verfügbar sein müssen. Alternativ ist ein Flashspeicher als Speicherbereich in der Chipkarte vorgesehen.

Der tragbare Datenträger ist mit einem Endgerät 1 über eine Kommunikationsverbindung 3 verbindbar. Die Ausgestaltung der Kommunikationsverbindung 3 ist nicht wesentlich für diese Anmeldung. Der tragbare Datenträger ist ebenfalls nicht in Form und Gestalt begrenzt. Insbesondere ist der tragbare Datenträger eine Chipkarte 2 oder eine Speicherkarte. Alternativ ist im Kerngedanken der Anmeldung ebenfalls ein Token oder eine softwarebasierte Struktur, beispielsweise in Form eines Sicherheitsmoduls oder einer Sicherheitsplattform innerhalb eines Betriebssystems, umfasst.

In der Figur 2 ist eine Struktur, die in der zentralen Recheneinheit CPU einer Java Card implementiert ist. Ziel von Java Card ist eine klare Trennung zwischen Betriebssystem und Anwendungen zu erzeugen. Zusätzlich soll dieselbe Anwendung plattformübergreifend auf verschiedenen Karten einsetzbar sein.

Dazu wird eine Struktur gemäß Figur 2 in der Chipkarte implementiert. Das Betriebssystem ist zunächst auf die Hardware aufgesetzt. Die eingangs beschriebene JCRE wird aus der JCVM, den API und darauf zugreifenden Anwendungen gebildet. Die JCVM wiederum beinhaltet einen Bytecode-Interpreter. Die Bezeichner werden im Folgenden näher erläutert.

Ein erstellter Programm-Quelltext eines vorbestimmten Programms, beispielsweise eines auf eine Java Card™ zu ladenden Programms, wird bei der Java™ Card Technologie zunächst mittels eines Compilers kompiliert, sodass eine Klassendatei erzeugt wird, die das Format eines Zwischencodes, nämlich des Java Bytecode, aufweist. Dieser Bytecode ist durch die virtuelle Java Maschine, kurz VM, interpretierbar. Anschließend wird bei der Java™ Card Technologie der Bytecode der Klassendatei zusätzlich mittels eines Konverters in einen konvertierten Bytecode konvertiert. Diese Kompilierung und Konvertierung wird außerhalb der Java Card durchgeführt und ist in Figur 2 nicht gezeigt.

In der Java Card 2.x wird der Bytecode in einer cap-Datei (cap = Card Application Protocol) über die Kommunikationsverbindung 3 mit Hilfe eines Installationsprogramms auf dem Endgerät 1 auf die Java Card übertragen. Anschließend wird der Bytecode der cap-Datei gelinkt. Beim Linken werden unter anderem Zugriffsmöglichkeiten des mit der cap-Datei auf die Java Card geladenen Programms auf andere in der Java Card vorhandene Programmcodeelemente eingerichtet, das heißt es werden Verbindungen zwischen den einzelnen Programmcodeelementen hergestellt. Bestandteil jeder Java Card sind die API Funktionen. Diese sind die Standardbibliothek einer Java Card und werden bereits bei der Herstellung der Chipkarte in die Java Card implementiert. Jegliche Programmcodeelemente können diese API Funktionen aufrufen.

Es wird noch mal darauf hingewiesen, dass das vorgeschlagene Komprimierungsverfahren auch auf älteren und zukünftigen Java Standards angewendet werden kann, wobei jüngere Java Card Versionen ab 3.0 Klassennamen direkt ohne cap-Dateiformat übertragen.

In Figur 3 ist eine beispielhafte Verknüpfung unterschiedlicher Programmcodeelemente gezeigt. Diese Verknüpfungen werden beim Linken durchgeführt. Dazu gibt ein Loader an, wo die einzelnen Programmcodeelemente zu finden sind. Eine Java Anwendung Applet 1 verwendet die beiden Java Pakete Paket 1 und Paket 2. Das Paket 1 wird dabei neu auf die Java Card übertragen, wohingegen Paket 2 bereits auf der Java Card vorhanden ist. Paket 1 umfasst die Klasse Klasse1 und die Methode Methode1. Paket 2 hingegen umfasst die Klasse Klasse2 und die Methode Methode2. Nun benötigt Paket1 zur Durchführung des Programmcodes auch die Klasse2 des Paket2. Da diese Klasse 2 bereits auf der Java Card implementiert ist, wird bei Aufruf des Appletl auf Klasse2 des Paket2 gezeigt. Dieses Zeigen wird durch Bezeichner ermöglicht. Die Bezeichner zeigen an, wo sich das aufgerufene Programmcodeelement befindet.

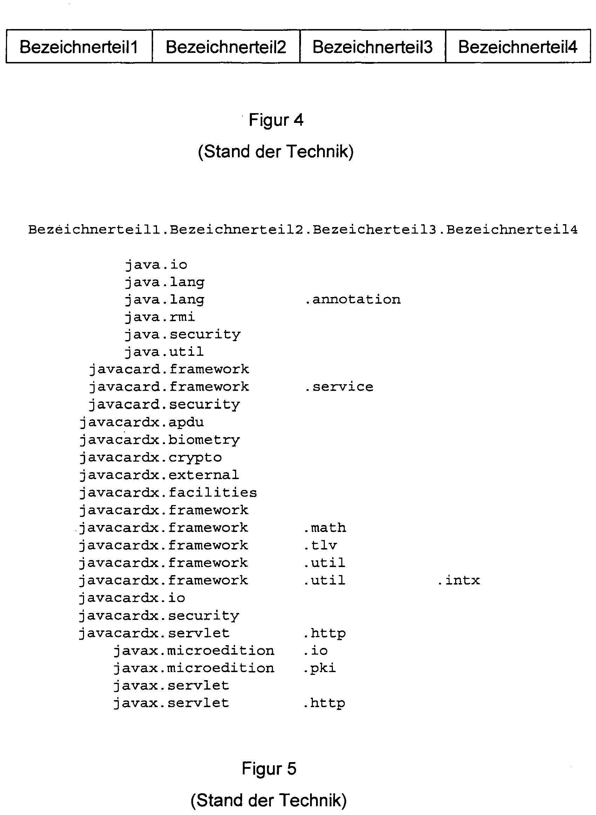

Ein prinzipieller Aufbau der Bezeichner ist in Figur 4 gezeigt. Die Bezeichner objektorientierter Programmiersprachen sind hierarchisch aufgebaut. Sie bestehen aus unterschiedlichen Bezeichnerteilen und sind durch einen Punkt getrennt.

Der Bezeichnerteil 1 des Bezeichners bezeichnet die sogenannte Top-Level-Domain. Dies stellt die höchste Ebene des Namensraums innerhalb einer Organisation dar. Der Bezeichnerteil2 ist die Domain der Organisation. Abschließend sind alle Sub-Domains in umgekehrter Reihenfolge aufgelistet, sodass die Organisation einen bestimmten Namen für ihre Bezeichner wählen kann.

Konkreter ausgedrückt gilt für die Programmiersprache Java, dass Bezeichnerteil1, Bezeichnerteil2 und/oder Bezeichnerteil3 das Java Paket bezeichnet, und dass Bezeichnerteil4 eine Klasse dieses Java Pakets bezeichnet. Alternativ bezeichnet der Bezeichner eine Methode und/oder eine Parameterliste. Die Länge des Bezeichners ist dabei flexibel. Auch die Anzahl der Bezeichnerteile ist flexibel. Bezeichnen Teile des Bezeichners ein Paket, kann der letzte Teil des Bezeichners ein Klasse bezeichnen. Ein Bezeichner kann insbesondere aus Teilen eines ersten Bezeichnertyps und Teilen eines zweiten Bezeichnertyps bestehen.

Wenn das Appletl auf die Chipkarte 2 geladen wird, prüft der sogenannte Loader der Chipkarte 2 nach, ob die vom Appletl aufgerufenen Programmcodeelemente, z.B. Klassen, Methoden, Pakete, Parameterlisten etc. auf der Chipkarte 2 vorhanden sind. Alternativ definiert das Appletl bereits auf der Chipkarte 2 vorhandene Programmcodeelemente neu. Eine Neudefinition eines Programmcodeelements bedeutet das Überschreiben des bereits existierenden Programmcodeelements im Halbleiterchip 21 der Chipkarte 2.

In beiden Fällen ist es unverzichtbar, dass der Chipkarte 2 eindeutig bekannt ist, welches Programmcodeelement bereits vorhanden ist. Dies ist nötig, da innerhalb der Chipkarte 2 beliebige Programmcodeelemente mit unterschiedlichen Bezeichnern hinzugefügt werden können.

Stellt beispielsweise die Organisation GD in Kanada ein Paket zur Verfügung, in welchem Kartendaten berechnet werden, so lautet der Bezeichnerteil1 ka, Bezeichnerteil2 gd, Bezeichnerteil3 kartendaten und Bezeichnerteil4 berechnung. Alle Bezeichnerteile werden mit Punkten getrennt. Der Bezeichner, der die Klasse Berechung aufruft lautet dann ka.gd.kartendaten.berechnung. Eine Klasse innerhalb eines Pakets einer US-Organisation GD das ebenfalls ein Paket zur Kartendatenberechnung vorgesehen hat, wird dann über den Bezeichner us.gd.kartendaten.berechnung aufgerufen. Beide Bezeichner definieren ihre Klassen in diesen beiden Paketen. Sie bilden einen einzigen und eigenen Namensraum. Es muss innerhalb dieses definierten Namensraums sichergestellt sein, dass die Programmcodeelemente in der Karte richtig verlinkt werden.

In Figur 5 ist beispielhaft eine Liste von 26 Bezeichnern von Paketen angegeben, wie sie herkömmlich in einer Chipkarte 2 abgelegt wird. Da diese Zeichenketten von Wörtern aus char-Zeichen aufgebaut ist und jedes Zeichen 1 Byte Speicherplatz benötigt, sind 458 Bytes Speicherplatz nötig, um diese 26 Bezeichner abzulegen. Oft wird zusätzlich zu den Bezeichnern noch der sogenannte Hashwert der Bezeichner in einem 16 Bit Format abgelegt, sodass 510 Byte Speicher zum Ablegen der 26 Bezeichner aufgewendet werden müssen. Wie in Figur 5 ersichtlich bestehen die Bezeichner der 26 Pakete aus einer unterschiedlichen Anzahl von Bezeichnerteilen, konkret zwischen zwei und vier Bezeichnerteilen. Der Speicherplatz in einer Chipkarte ist enorm begrenzt, heutzutage typischerweise 512kB, sodass hier ein Komprimierungsverfahren vorgeschlagen wird. Zur Komprimierung der Bezeichner müssen mehrere Aspekte berücksichtigt werden, nämlich die Art der Komprimierung, verlustbehaftet oder verlustfrei, soll eine bestimmte Teilmenge komprimiert werden, sollen die Bezeichner komplett oder nur Teile davon komprimiert werden, wie viel Zugriffszeit soll gespart werden und vieles mehr.

Zu beachten ist Folgendes: Bei der Anwendung einer verlustbehafteten Komprimierungsfunktion kann es zu Kollisionen beim Aufruf des entsprechenden Programmcodeelements kommen. Dies geschieht, wenn die Bezeichner von zwei unterschiedlichen Programmcodeelementen durch die verlustbehaftete Komprimierungsfunktion auf denselben Wert abgebildet werden. Dies kann dazu führen, dass unabsichtlich ein Programmcodeelement von einem völlig anderen Programmcodeelement überschrieben wird. Dadurch würde die Chipkarte 2 unbrauchbar werden, sodass Kollisionen auf der Chipkarte 2 stets zu vermeiden sind.

Zur Erläuterung muss zunächst die Suchreihenfolge für auf der Chipkarte 2 existierende Programmcodeelemente beschrieben werden. Die Reihenfolge wird durch die Class Loader Hierarchie festgelegt. Bei Java Card 3.0 läuft die Suche in vier Schritten ab. Zunächst wird das aufzurufende Programmcodeelement, z.B. eine Klasse, in dem Programmcodeelement, z.B. einem Paket, gesucht, in dem sich das aufrufende Programmcodeelement selbst befindet. Existiert das aufzurufende Programmcodeelement nicht, wird in den sogenannten Extended Libraries gesucht. Existiert das aufzurufende Programmcodeelement auch da nicht, wird in den sogenannten Shareable Objects gesucht. Existiert das aufzurufende Programmcodeelement auch da nicht, wird abschließend in den API Funktionen gesucht, wo spätestens die Suche erfolgreich sein wird.

Eine Extended Library mit der Bezeichnung com.gieseckedevrient.myClass wird demnach von com.gieseckedevrient.myClass überschrieben, wenn sich letztere Klasse in demselben Paket wie die aufrufende Klasse befindet. Eine verlustbehaftete Komprimierung, zum Beispiel das Anwenden einer Hashfunktion oder eines anderen Algorithmus auf die Zeichenkette des Bezeichners ergibt zum Beispiel:

```
com.gieseckedevrient.myclass        Hashwert: 1234, gespeichert in
                                    den „Extended Libraries"
```

Zufälligerweise könnte die Zeichenkette

```
com.anybodyelse.someotherclass      Hashwert: 1234, gespeichert im
                                    Paket
```

den gleichen Hashwert ergeben. Da ausschließlich die Hashwerte zum Verlinken der Programmcodeelemente verwendet werden würden, würde der Aufruf des Programmcodeelements com.gieseckedevrient.myClass bei com.anybodyelse.someotherclass aufgerufen werden und somit die Karte unbrauchbar werden.

API Funktionen unter Java obliegen dem Gebot, dass sie nicht überschrieben werden dürfen. Somit sind Programmcodeelemente, die mit dem Bezeichnerteil java, javax, javacard, javacardx und com.sun beginnen, vom Überschreiben bzw. Ersetzen ausgenommen. Diese API Funktionen bilden im Sinne der Erfindung einen ersten Typ von Bezeichnern. Zusätzlich sind die API Funktionen fest definiert, d.h. es kommen innerhalb einer Java Version keine neuen Programmcodeelemente hinzu.

Somit ergibt sich für Bezeichner, deren Bezeichnerteile mit einem der fünf Abschnitten java, javax, javacard, javacardx, com.sun beginnt, folgende Möglichkeit. Zum Zeitpunkt der Entwicklung der Java Card wird eine Komprimierungsfunktion gesucht, welche die Bezeichner der Java API Funktionen kollisionsresistent komprimiert. Da bei der ausgelieferten Java Card keine neuen Java API Funktionen hinzukommen können, können auch keine Kollisionen durch nachträglich übertragene Bezeichner auftreten. Somit kann die Komprimierung verlustbehaftet sein und erhält somit einen sehr hohen Komprimierungsgrad. Die Abbildung der komprimierten Bezeichner ist trotzdem immer eindeutig.

Alternativ kann natürlich auch nur eine Teilmenge der Bezeichner von API Funktionen komprimiert werden, beispielsweise nur Bezeichner der API Funktionen java und javax oder nur einer Teilmenge aus java und einer Teilmenge aus javax. Dadurch ist eine geringere Anzahl an Bezeichnern zu komprimieren, was zu kürzeren komprimierten Bezeichnern führt. Diese kürzeren komprimierten Bezeichner können in der Folge schneller aufgerufen werden, sodass Zugriffszeit eingespart ist. Ein Maß zum Auswählen einer Teilmenge ist beispielsweise die Häufigkeit des Aufrufens einer bestimmten API Funktion.

Gehören Bezeichnerteile nicht zur Menge der API Funktionen, werden Kollisionen dadurch vermieden, dass der Loader die verlustbehaftete Komprimierung bei den zu ladenden Programmcodeelementen nur für die Teile der Bezeichner ermittelt, die zu den API Funktionen gehören. Alle anderen Teile der Bezeichner werden dann gar nicht oder verlustfrei komprimiert und abgelegt. Dies ist insbesondere bei Bezeichnern zu beachten, deren letzter Teil eine Klasse als Programmcodeelement aufruft. Bezeichner von Klassennamen sind verlustfrei zu komprimieren.

Die verlustbehaftete Komprimierung ist dabei nicht an einen speziellen mathematischen Algorithmus gebunden. Sie muss lediglich die Anforderung erfüllen, dass der Speicherbedarf der komprimierten Bezeichner geringer als der Speicherbedarf der übertragenen Bezeichner ist. Bevorzugt ist der komprimierte Bezeichner entsprechend kurz, sodass die Zugriffszeiten auf das Programmcodeelement verringert sind (im Vergleich zur Zugriffszeit auf Programmcodeelemente durch einen nicht komprimierten Bezeichner).

Eine verlustbehaftete Komprimierung ist beispielsweise mittels einer Hashfunktion erreicht. Dabei ist aus dem Stand der Technik eine Vielzahl von Algorithmen bekannt, auf die hier nicht im Einzelnen eingegangen wird. Eine passende kollisionsfreie Hashfunktion für die Java API Funktionen der Java Card 3.0 oder einer Teilmenge daraus lautet beispielsweise:

```
Hashwert = Bezeichner[i] + (Hashwert << 6) + (Hashwert

<< 16) - Hashwert,
```

wobei Hashwert = 32 Bit(unsigned) mit Initialwert 0 und i der Index des Zeichens 0... n-1 (aufsteigend laufend) ist. Der Wert n ist die Länge des jeweiligen Bezeichners in Zeichen (characters).

Der Bezeichner kann nun wie folgt verlustbehaftet komprimiert werden. Der ermittelte Hashwert, der den Bezeichner kollisionsresistent abbildet besteht aus zwei Hashwerten zu je 16 Bit, wobei die ersten 16 Bit den Hashwert über das Paket und die zweiten 16 Bit über die Klasse, also den letzten Bezeichnerteilbilden. Somit ist ein Bezeichner mit 32bit, also 4Byte beschrieben.

Die getrennte Komprimierung des Bezeichners ist speziell dann sinnvoll, wenn bei Schnittstellen, die von einer verlustbehafteten Komprimierung des Bezeichnerteils einer API Klasse implementiert werden, die richtige Methode für einen Aufruf gefunden werden soll. Die Teile des Bezeichners, die nicht verlustbehaftet komprimiert werden, gehören einem zweiten Typ von Bezeichnern an.

Somit sind den API Funktionen auf der Chipkarte 2 keine Bezeichner mit Zeichenketten aus char-Zeichen abgelegt, sondern die Bezeichner sind komprimiert und bestehen aus den Hashwerten.

Abhängig von der Teilmenge der Bezeichner und deren Länge werden bis zu 15kByte Speicher im Halbleiterchip 21 der Chipkarte 2 durch eine derartige Komprimierung eingespart. Dieser Speicherbereich kann dem Benutzer zusätzlich zur Verfügung steht.

Darüber hinaus werden bei den zu ladenden Anwendungen vom Loader die Bezeichner von API Funktionen durch diejenigen Hashwerte ersetzt, die bereits bei der Komprimierung der eigentlichen Bezeichner angewendet worden sind. Auf diese Weise ist die Größe der Anwendung zusätzlich reduziert.

Das derartige Komprimieren der Bezeichner hat weitere positive Effekte. Bei der Ausführung der Anwendung werden nun keine Zeichenketten vom char-Zeichen verglichen, sondern nur noch die beiden Hashwerte (=komprimierter Bezeichner), die aufgrund ihrer geringen Größe (2* 16 Bit) von der zentralen Recheneinheit CPU sehr gut verarbeitet werden können und die Aufrufgeschwindigkeit bzw. die Zugriffsgeschwindigkeit auf das jeweiligen Programmcodeelement deutlich erhöht.

Eine weitere Erhöhung der Aufrufgeschwindigkeit wird erreicht, indem die komprimierten Bezeichner (Hashwerte) der API Funktionen entsprechend geordnet werden. Die komprimierten Bezeichner werden nach ihrem Wert geordnet im Speicherbereich der Chipkarte 2 abgelegt. Bei einem Aufruf eines Bezeichners ist nun anstelle einer linearen Suche eine binäre Suche möglich, wodurch die Aufrufgeschwindigkeit nochmals erhöht wird.

Eine lineare Suche $O(n)$ unter n = 1180 Bezeichnerteilen benötigt im statistischen Mittel 590 Speicherzugriffe, eine binäre Suche $O(\log(n))$ hingegen nur 10,2 Speicherzugriffe. Eine binäre Suche mit einer geeigneten Schätzung ($O(\log(\log(n)))$) bei ungefährer Gleichverteilung der komprimierten Bezeichner benötigt im statistischen Mittel nur noch 3,35 Speicherzugriffe.

Ein denkbarer Angriff auf die Chipkarte ist, dass bei der Programmierung der Anwendung außerhalb der Chipkarte 2, die API Funktionen entgegen der Vorschriften um Programmcodeelemente ergänzt werden. Diese ergänzten Programmcodeelemente, beispielsweise Klassen oder Methoden, sind derart gewählt, dass auf der Chipkarte 2 Kollisionen bei den Hashwerten entstehen würden. Der Bezeichner des Programmcodeelements java.lang.String.append würde bei einem Aufruf mit einer ergänzten Programmcodeelement java.anything.somewhere.somehow kollidieren.

Bei Aufruf des ergänzten Programmcodeelements würde dennoch die API Funktion java.lang.String.append ausgeführt werden. Dies stellt jedoch weder ein Problem noch eine Sicherheitslücke dar, da der Benutzer das ergänzenden Programmcodeelement der API Funktion außerhalb der Chipkarte 2 mutwillig und mit viel Fachwissen vornehmen muss und im Falle einer provozierten Kollision trotzdem nur die existierenden Java API Funktionen aufgerufen werden würde.

Durch die verlustbehaftete Komprimierung zumindest eines Teils der Bezeichner ist eine deutliche Einsparung von Speicherplatz erreicht. Der notwendige Speicherplatz zur Speicherung der Anwendungen wird reduziert, da die Aufrufe der API Funktionen nun als Hashwerte mit 4Byte Größe vorliegen und zusätzlich werden schnellere Programmcodeelementaufrufe erzielt. Eine höhere Ausführungsgeschwindigkeit ist bei zeitkritischen Anwendungen, zum Beispiel bei Kommunikation, insbesondere NFC, wesentlich erhöht. Dabei ist keine Änderung der Anwendungen nötig, diese werden einfach schneller abgearbeitet und effizienter gespeichert.

Der wesentliche Vorteil ist, dass das System zu dem bestehenden Java Standard kompatibel ist, da die Komprimierung auf der Chipkarte 2 selbst erfolgt und nach außen keinerlei Auswirkungen hat.

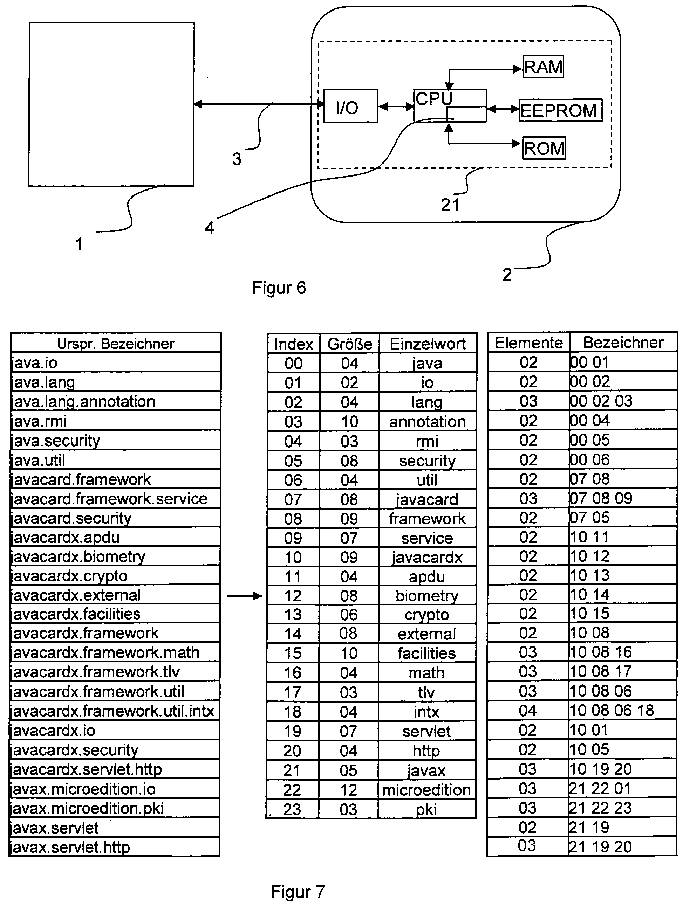

In Figur 6 ist der Aufbau einer Chipkarte gemäß der Erfindung gezeigt. Der Aufbau entspricht im Wesentlichen dem Aufbau gemäß Figur 1. Im Folgenden werden daher nur die Unterschiede zur Figur 1 beschrieben. Die zentrale Recheneinheit CPU umfasst nunmehr eine Komprimierungseinheit 4. Diese Komprimierungseinheit typisiert die zu komprimierenden Bezeichner. Ein erster Bezeichnertyp ist dabei zumindest ein Teil eines Bezeichners, der eine API Funktion aufruft. Ein derartiger Bezeichnertyp darf gemäß Java Standard nicht überschrieben werden, sodass dieser erste Bezeichnertyp verlustbehaftet komprimiert werden kann. Ein Teil eines Bezeichners gehört dahingegen einem zweiten Bezeichnertyp an, wenn er überschrieben werden kann und demnach zum Erhalt eines eindeutigen Namensraums kollisionsresistent abzulegen ist. Das Typisieren kann noch weitere Bezeichnertypen umfassen, beispielsweise kann ein Bezeichnertyp definiert sein, wobei Bezeichner einen Bezeichnerteil umfasst, der zu den API Funktionen gehört, der aber trotzdem nicht verlustbehaftet komprimiert wird. Der Definition des Typs von Bezeichnern ist prinzipiell keine Grenze gesteckt, die Parameter hierfür sind: Anzahl, benötigter Komprimierungsgrad, Aufrufgeschwindigkeit etc.

Nach dem Typisieren wird entsprechend des Typs eine Komprimierungsfunktion zumindest auf den Teil des Bezeichners angewendet. Diese Komprimierungsfunktion ist entweder verlustbehaftet oder verlustfrei, siehe Figurenbeschreibung 4 und 5. Ist der komprimierte Bezeichner erhalten, wird er im Speicherbereich der Chipkarte 2 abgelegt.

In Figur 7 ist eine Tabelle dargestellt, in der übertragene Bezeichner gegenüber komprimierten Bezeichnern, die gemäß einem verlustfreien Komprimierungsverfahren gemäß der Erfindung komprimiert sind, gegenübergestellt sind. Die Bezeichner dienen dem Aufrufen von Programmcodeelementen. Die Bezeichner, die auf die Chipkarte 2 übertragen worden sind, sind gemäß Figur 4 aufgebaut und bezeichnen hier beispielsweise Pakete, die API Funktionen aufrufen. Es ist sehr einfach zu erkennen, dass diese 26 Bezeichner eine Vielzahl von Bezeichnerteilen aufweisen, die sich wiederholen. Bei der verlustfreien Komprimierung wird diese Redundanz der Bezeichner entfernt. Dazu werden die Bezeichner in Listenform abgelegt, was durch den Pfeil angedeutet wird.

Eine erste Liste beinhaltet alle vorkommenden Einzelwörter, siehe mittlere Tabelle. Eine zweite Liste beinhaltet die Anzahl der Einzelwörter und die Indizes der korrespondierenden Einzelwörter aus der Einzelwortliste und ist in der dritten Tabelle dargestellt.

Beim Komprimieren der Bezeichner werden die einzelnen Bezeichnerteile gemäß ihrer Einzelwörter analysiert. Diese Einzelwörter werden in der ersten Liste abgelegt. Zusätzlich wird in der zweiten Liste die Anzahl der einzelnen Wörter und Indizes gelistet aus der Einzelwörter Liste.

Damit keine Trennzeichen beim Ablegen der komprimierten Bezeichner verwendet werden müssen, beginnt der komprimierte Bezeichner mit der Anzahl der Wörter, die im gesamten Bezeichner ursprünglich enthalten waren.

Mit diesem verlustfreien Komprimierungsverfahren ist es möglich, bis zu 50% des benötigten Speicherbedarfs einzusparen, da sich viele Einzelwörter wiederholen.

Dieses Verfahren ist eindeutig und die Liste kann dynamisch erweitert werden, wenn weitere Bezeichner zum Aufrufen von Programmcodeelementen übertragen werden und komprimiert werden sollen.

Um den Aufruf der Programmcodeelemente zu beschleunigen, werden zusätzlich die Hashwerte der Einzelworte gebildet und nur die Haswerte der Einzelworte in der ersten Liste abgelegt. Man verwendet dann den Hashwert zum Vergleichen, ob ein Programmcodeelement auf der Chipkarte vorhanden ist. Für den Vergleich ist nunmehr kein aufwendiger Zeichenkettenvergleich notwendig, was die Aufrufgeschwindigkeit erhöht. Dieses Verfahren erspart zusätzlich Speicherbedarf.

Man nutzt nun diese Speicherplatzoptimierung aus und speichert noch zusätzlich den Hashwert der übertragenen Bezeichner vor der Komprimierung ab. So kann man die Hashwerte der später auf die Chipkarte 2 übertragenen Bezeichner berechnen und mit den Hashwerten der Bezeichner vor der Komprimierung vergleichen. Eine Übereinstimmung der Hashwerte zeigt dann an, dass das Programmcodeelement bereits auf der Chipkarte ist. Sollte der Hashwert mehrdeutig sein, müssen die entsprechenden Bezeichnerteile erzeugt werden, um diese dann mit dem später übertragenen Bezeichner zu vergleichen.

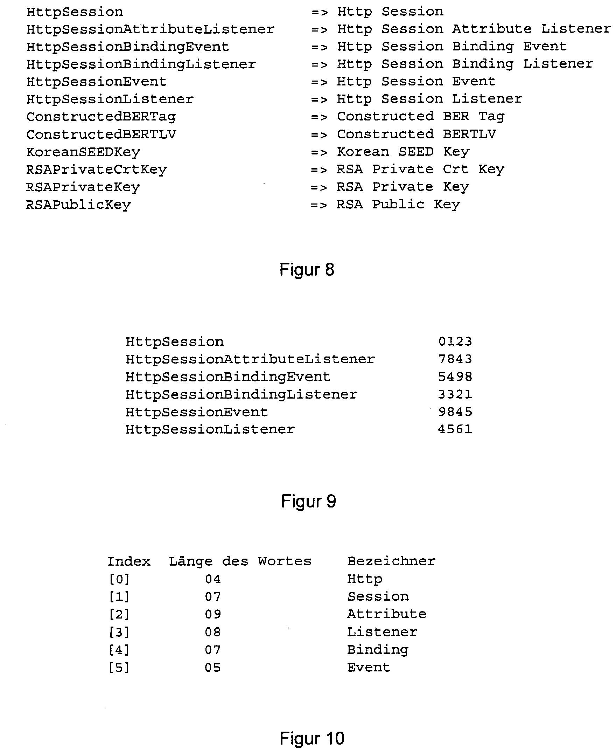

Als Bezeichnerteile sind beispielsweise Klassennamen abzulegen. Die Teile von Bezeichnern, die Klassennamen bezeichnen, sind zumeist mit den Bezeichnern, die Pakete bezeichnen kombiniert. Gemäß Java ist die Kombination dergestalt, dass der letzte Bezeichnerteil die Klasse des Bezeichners bezeichnet. In Figur 8 linke Spalte sind beispielhaft Klassennamen aufgelistet, wie sie auf die Chipkarte 2 übertragen werden. Sie beginnen in der Regel mit einem Großbuchstaben. Im Folgenden werden Möglichkeiten gegeben, wie die Einzelwörter bei Klassennamen als Bezeichnerteil erhalten werden können.

Diese Klassennamen werden nun nach Großbuchstaben analysiert. Findet man einen Großbuchstaben, beginnt ein neues Wort. Folgt dem Großbuchstabe ein Kleinbuchstabe muss solange in der Zeichenkette weiter gesucht werden bis ein neuer Großbuchstabe oder ein Terminierungszeichen kommt. Folgt danach wieder ein Großbuchstabe, ist das Wort fertig analysiert. Nun beginnt ein neues Wort. Folgt ein Terminierungszeichen ist das Wort komplett.

Folgt nach einem Großbuchstaben wieder ein Großbuchstabe, so muss solange analysiert werden bis dem letzten Großbuchstaben ein Kleinbuchstabe oder ein Terminierungszeichen folgt. Folgt ein Kleinbuchstabe muss 2 Buchstaben zurückgegangen werden und das Wort ist zu terminieren. Folgt ein Terminierungszeichen ist das Wort komplett. Auf diese Weise wird die rechte Spalte der in Figur 8 dargestellten Tabelle erhalten. Ist das gefundene Wort bereits in der Einzelworttabelle enthalten, wird es nicht erneut abgelegt, sondern nur die Anzahl und der Index entsprechend aktualisiert.

In Figur 9 sind Beispiele für das Ermitteln von Hashwerten in Bezug auf den übertragenen Bezeichnerteil angegeben. Der Hashwert besteht hier aus 2x16 Bit. Eine Funktion, die derartige Hashwerte ermitteln kann, ist im Stand der Technik weitläufig bekannt.

Anschließend wird der Bezeichner gescannt und mit Hilfe der Tabelle aus Figur 9 komprimiert. Das Resultat wird in der Tabelle der Figur 10 ersichtlich.

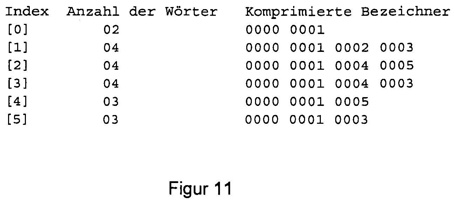

Abhängig von der Anzahl der Einzelworte in der Tabelle kann nun ein Ablageformat in der Chipkarte gewählt werden. Sind mehr als 256 Einzelworte aber weniger als $2^{16}$ Einzelworte abgelegt, kann das Format der komprimierten Bezeichner gemäß der Figur 11 gewählt werden.

Im Speicherbereich der Chipkarte 2 werden die Hashwerte der Einzelworte gemäß Figur 9, die Tabelle der Bezeichnerteile gemäß Figur 10 sowie die komprimierten Bezeichner gemäß Figur 11 abgelegt.

Werden weitere Bezeichnerteile auf die Chipkarte 2 übertragen, so wird zunächst mit der Suche nach dem Hashwert des Bezeichners begonnen. Die Hashwerte sind im Namensraum noch nicht eindeutig, aber sie reduzieren die in Frage kommenden Bezeichner bereits. Idealerweise ist nur ein gleicher Hashwert abgelegt, sodass der Bezeichner mit dem komprimierten Bezeichner übereinstimmt. Wenn es zu einer Mehrdeutigkeit des Bezeichners an dieser Stelle kommt, so müssen alle in Frage kommenden komprimierten Bezeichner dekomprimiert werden und ein Vergleich über die dekomprimierten Bezeichner durchgeführt werden.

Ein Rechenbeispiel verdeutlicht die Speicherplatzeinsparung. Zunächst ohne Komprimierung. Werden 273 Wörter für Java Klassennamen verwendet, so sind das in einem Beispiel 3864 Zeichen ohne Leerzeichen, siehe Ansatzweise Figur 8, linke Spalte der Tabelle. Der benötigte Speicherplatz der Klassennamen beträgt 3864 Byte ohne Leerzeichen + 546 Byte der Hashwerte, also insgesamt 4410 Byte.

Wird anstelle der in Figur 8 bis 10 beschriebene Komprimierung angewendet, so werden die Klassennamen in 218 Einzelwörter zerlegt, was 1376 Zeichen ohne Leerzeichen entspricht. Der benötigte Speicherplatz beträgt 1376 Byte der Worte ohne Leerzeichen + 273 Byte der Anzahl der Wörter + 604 Byte der komprimierten Bezeichner = 2253 Byte insgesamt. Das resultiert in einer Einsparung von 49% durch die verlustfreie Komprimierung.

Nicht dargestellt, aber vom Erfindungsgedanken nicht ausgenommen sind Bezeichner, die Methoden und Parameterlisten bezeichnen. Diese können, wie in dem Verfahren gemäß Figuren 8 bis 11 beschrieben, ebenfalls verlustfrei komprimiert werden. Diese komprimierten Bezeichnerteile für Methoden und Parameterlisten können dann in einer dritten oder vierten Tabelle abgelegt werden. Alternativ werden diese Bezeichnerteile ebenfalls in die erste und zweite Tabelle abgelegt.

Bezugszeichenliste

| | |
|---|---|
| 1 | Endgerät |
| 2 | Chipkarte, insbesondere Java Card |
| 21 | Halbleiterchip |
| 3 | Kommunikationsverbindung |
| 4 | Komprimierungseinheit |
| API | Application Programming Interface, Java Card Standardbibliothek |
| Applet1 | Eine Java Anwendung, ausführbarer Programmcode |
| CPU | zentrale Recheneinheit |
| EEPROM | nicht-flüchtiger Speicherbereich |
| I/O | Eingabe/ Ausgabeeinheit |
| JCRE | Java Card Runtime Environment |
| JCVM | Java Card Virtual Machine |
| Klasse1, 2 | Programmcodeelement innerhalb eines Java Pakets |
| Methode1,2 | Programmcodeelement innerhalb einer Java Klasse, Funktion |
| Paket1, 2 | Programmcodeelement innerhalb einer Java Anwendung |
| RAM | flüchtiger Speicherbereich |
| ROM | nicht-flüchtiger Speicherbereich |

**Patentansprüche**

1. Verfahren zum Komprimieren eines Bezeichners eines Programmcodeelements in einem tragbaren Datenträger, wobei der Bezeichner aus einer unterschiedlichen Anzahl von Bezeichnerteilen aufgebaut ist, mit den Verfahrensschritten:

- Typisieren der Bezeichnerteile, wobei es einen ersten Bezeichnertyp und einen zweiten Bezeichnertyp gibt;

11

- abhängig von dem Schritt des Typisierens:

Anwenden einer ersten, verlustbehafteten Komprimierungsfunktion zumindest auf Bezeichnerteile, welche gemäß dem Schritt des Typisierens vom ersten Bezeichnertyp sind, oder
Anwenden einer zweiten, verlustfreien Komprimierungsfunktion zumindest auf Bezeichnerteile, welche gemäß dem Schritt des Typisierens vom zweiten Bezeichnertyp sind;

- Ablegen des erhaltenen, komprimierten Bezeichners in einem Speicherbereich (21) des tragbaren Datenträgers (2), wobei der komprimierte Bezeichner zum Ausführen der Programmcodeelemente aufgerufen wird.

2.  Verfahren nach Anspruch 1 wobei der erste Bezeichnertyp die Programmcodeelemente einer Standardbibliothek, welche nicht um weitere Programmcodeelemente erweitert wird, betrifft.

3.  Verfahren nach Anspruch 2 wobei der zweite Bezeichnertyp die anderen Programmcodeelemente betrifft.

4.  Verfahren nach einem der vorhergehenden Ansprüche, wobei ein weiterer Teil des Bezeichnerteils des ersten Bezeichnertyps einen Klassennamen angibt und der weitere Teil des Bezeichners verlustfrei komprimiert wird.

5.  Verfahren nach einem der vorhergehenden Ansprüche, wobei die Bezeichner hierarchisch strukturiert sind.

6.  Verfahren nach einem der vorhergehenden Ansprüche, wobei als die verlustbehaftete Komprimierungsfunktion eine Hashfunktion angewendet wird.

7.  Verfahren nach Anspruch 6, wobei die verlustbehaftete Komprimierungsfunktion derart gewählt ist, dass bezüglich einer definierten Menge von Bezeichnern keine Kollisionen auftreten.

8.  Verfahren nach einem der vorhergehenden Ansprüche, wobei der erste Bezeichnertyp die Application-Programming-Interface (API) Funktionen oder eine Teilmenge davon betrifft.

9.  Verfahren nach einem der vorhergehenden Ansprüche, wobei der Bezeichnerteil des zweiten Bezeichnertyps in Listenform abgelegt wird, wobei eine erste Liste eine Liste aus Teilen des Bezeichners und/oder der Hashwerte der Teile des Bezeichners ist und eine zweite Liste eine Liste aus der Anzahl der Teile des Bezeichners und Indizes zu den korrespondierenden Teilen des Bezeichners der ersten Liste ist.

10. Verfahren nach einem der vorhergehenden Ansprüche, wobei der komprimierte Bezeichner ein Paket, eine Methode, eine Klasse und/oder eine Parameterliste als Programmcodeelement aufrufen kann.

11. Verfahren zum Aufrufen eines gemäß den vorhergehenden Ansprüchen komprimierten Bezeichners in dem tragbaren Datenträger.

12. Verfahren gemäß Anspruch 11, wobei der komprimierte Bezeichner ein Programmcodeelement eindeutig aufruft und kollisionsresistent ist.

13. Verfahren gemäß Anspruch 12, wobei ein Programmcodeelement wiederum Bezeichnern von Programmcodeelementen aufweist und diese Bezeichner in den Programmcodeelementen ebenfalls nach dem Verfahren gemäß den Ansprüchen 1 bis 10 komprimiert sind.

14. Tragbarer Datenträger (2), worin das Verfahren gemäß den Ansprüchen 1 bis 10 ausgeführt wird.

15. Halbleiterchip (21) für einen tragbaren Datenträger (2), unter anderem aufweisend eine zentrale Recheneinheit (CPU), einen flüchtigen und einen nichtflüchtigen Speicherbereich (RAM,ROM,EEPROM), wobei in der zentralen Recheneinheit (CPU) eine Komprimierungseinheit (4) vorgesehen ist, und die Komprimierungseinheit (4) die Bezeichner gemäß einem Verfahren gemäß den Ansprüchen 1 bis 10 komprimiert und wobei die komprimierten Bezeichner im flüchtigen und/oder nichtflüchtigen Speicherbereich (RAM,ROM,EEPROM) des Datenträgers abgelegt werden.

**Claims**

1.  A method for compressing an identifier of a program code element in a portable data carrier, wherein the identifier is constructed from a different number of identifier parts, having the method steps:

    - typing the identifier parts, wherein there is a first identifier type and a second identifier type;
    - depending on the step of the typing:

      applying a first, lossy compression function at least to identifier parts which according to the step of the typing are of the first identifier type, or
      applying a second, lossless compression function at least to identifier parts which according to the step of the typing are of the second type;

    - storing the received compressed identifier in a memory area (21) of the portable data carrier (2), wherein the compressed identifier is called for executing the program code elements.

2.  The method according to claim 1, wherein the first identifier type concerns the program code elements of a standard library which is not extended by further program code elements.

3.  The method according to claim 2, wherein the second identifier type concerns the other program code elements.

4.  The method according to any of the preceding claims, wherein a further part of the identifier part of the first identifier type states a class name and the further part of the identifier is losslessly compressed.

5.  The method according to any of the preceding claims, wherein the identifiers are structured hierarchically.

6.  The method according to any of the preceding claims, wherein a hash function is applied as the lossy compression function.

7.  The method according to claim 6, wherein the lossy compression function is chosen such that no collisions occur with regard to a defined set of identifiers.

8.  The method according to any of the preceding claims, wherein the first identifier type concerns the Application Programming Interface (API) functions or a subset thereof.

9.  The method according to any of the previous claims, wherein the identifier part of the second identifier type is stored in list form, wherein a first list is a list of parts of the identifier and/or of the hash values of the parts of the identifier, and a second list is a list of the number of parts of the identifier and indices for the corresponding parts of the identifier of the first list.

10. The method according to any of the preceding claims, wherein the compressed identifier can call a package, a method, a class and/or a parameter list as a program code element.

11. A method for calling an identifier compressed according to the preceding claims in the portable data carrier.

12. The method according to claim 11, wherein the compressed identifier calls a program code element uniquely and is collision-resistant.

13. The method according to claim 12, wherein a program code element in turn has identifiers of program code elements, and these identifiers in the program code elements are likewise compressed by the method according to claims 1 to 10.

14. A portable data carrier (2), in which the method is executed according to the claims 1 to 10.

15. A semiconductor chip (21) for a portable data carrier (2), having, inter alia, a central processing unit (CPU), a volatile and a non-volatile memory area (RAM, ROM, EEPROM), where there is provided in the central processing unit (CPU) a compression unit (4), and the compression unit (4) compresses the identifiers according to a method according to claims 1 to 10, and wherein the compressed identifiers are stored in the volatile and/or non-volatile memory area (RAM, ROM, EEPROM) of the data carrier.

**Revendications**

1. Procédé de compression d'un identificateur d'un élément de code de programme dans un support de données portable, l'identificateur étant constitué à partir d'un nombre différent de parties d'identificateur, comprenant les étapes :

   - typage des parties d'identificateur, cependant qu'il y a un premier type d'identificateur et une deuxième type d'identificateur ;
   - en fonction de l'étape du typage :

      application d'une première fonction de compression, avec perte, au moins à des parties d'identificateur qui sont, suivant l'étape du typage, du premier type d'identificateur, ou
      application d'une deuxième fonction de compression, sans perte, au moins à des parties d'identificateur qui sont, d'après l'étape du typage, du deuxième type d'identificateur ;

   - stockage de l'identificateur comprimé obtenu dans une zone mémoire (21) du support de données portable (2), cependant que l'identificateur comprimé est appelé pour l'exécution des éléments de code de programme.

2. Procédé selon la revendication 1,cependant que le premier type d'identificateur concerne les éléments de code de programme d'une bibliothèque standard qui n'est pas élargie d'éléments de code de programme supplémentaires.

3. Procédé selon la revendication 2, cependant que le deuxième type d'identificateur concerne les autres éléments de code de programme.

4. Procédé selon une des revendications précédentes, cependant qu'une partie supplémentaire de la partie d'identificateur du premier type d'identificateur indique un nom de classe, et que la partie supplémentaire de l'identificateur est comprimée sans perte.

5. Procédé selon une des revendications précédentes, cependant que les identificateurs sont structurés hiérarchiquement.

6. Procédé selon une des revendications précédentes, cependant que, en tant que la fonction de compression avec perte, c'est une fonction de hachage qui est employée.

7. Procédé selon la revendication 6,cependant que la fonction de compression avec perte est sélectionnée de telle façon que, en ce qui concerne une quantité définie d'identificateurs, il n'y a pas de collisions qui surviennent.

8. Procédé selon une des revendications précédentes, cependant que le premier type d'identificateur concerne les fonctions d'une API (Application Programming Interface) ou une quantité partielle de ces dernières.

9. Procédé selon une des revendications précédentes, cependant que la partie d'identificateur du deuxième type d'identificateur est stockée sous forme de listes, cependant qu'une première liste est une liste composée de parties de l'identificateur et/ou des valeurs de hachage des parties de l'identificateur, et qu'une deuxième liste est une liste composée du nombre des parties de l'identificateur et d'indices relatifs aux parties correspondantes de l'identificateur de la première liste.

10. Procédé selon une des revendications précédentes, cependant que l'identificateur comprimé peut appeler en tant qu'élément de code de programme un paquet, une méthode, une classe et/ou une liste de paramètres.

11. Procédé d'appel,dans le support de données portable, d'un identificateur comprimé suivant une des revendications précédentes.

12. Procédé selon la revendication 11,cependant que l'identificateur comprimé appelle univoquement un élément de code de programme et est résistant aux collisions.

13. Procédé selon la revendication 12,cependant qu'un élément de code de programme comporte à son tour des identificateurs d'éléments de code de programme, et que ces identificateurs sont comprimés dans les éléments de code de programme également suivant le procédé selon les revendications de 1 à 10.

**14.** Support de données portable dans lequel le procédé suivant les revendications de 1 à 10 est exécuté.

**15.** Puce semi-conductrice (21) destinée à un support de données portable (2), comprenant entre autres une unité de calcul centrale (CPU), une zone mémoire volatile et une non volatile (RAM, ROM, EEPROM), cependant que, dans l'unité de calcul centrale (CPU), une unité de compression (4) est prévue, et que l'unité de compression (4) comprime les identificateurs suivant un procédé selon les revendications de 1 à 10, et cependant que les identificateurs comprimés sont stockés dans la zone mémoire volatile et/ou non volatile (RAM, ROM, EEPROM) du support de données portable.

Figur 1

(Stand der Technik)

Figur 2

(Stand der Technik)

Figur 3

(Stand der Technik)

| Bezeichnerteil1 | Bezeichnerteil2 | Bezeichnerteil3 | Bezeichnerteil4 |
|---|---|---|---|

### Figur 4

### (Stand der Technik)

```
Bezeichnerteil1.Bezeichnerteil2.Bezeicherteil3.Bezeichnerteil4

              java.io
              java.lang
              java.lang          .annotation
              java.rmi
              java.security
              java.util
          javacard.framework
          javacard.framework     .service
          javacard.security
        javacardx.apdu
        javacardx.biometry
        javacardx.crypto
        javacardx.external
        javacardx.facilities
        javacardx.framework
        javacardx.framework      .math
        javacardx.framework      .tlv
        javacardx.framework      .util
        javacardx.framework      .util              .intx
        javacardx.io
        javacardx.security
        javacardx.servlet        .http
            javax.microedition   .io
            javax.microedition   .pki
            javax.servlet
            javax.servlet        .http
```

### Figur 5

### (Stand der Technik)

Figur 6

| Urspr. Bezeichner |
| --- |
| java.io |
| java.lang |
| java.lang.annotation |
| java.rmi |
| java.security |
| java.util |
| javacard.framework |
| javacard.framework.service |
| javacard.security |
| javacardx.apdu |
| javacardx.biometry |
| javacardx.crypto |
| javacardx.external |
| javacardx.facilities |
| javacardx.framework |
| javacardx.framework.math |
| javacardx.framework.tlv |
| javacardx.framework.util |
| javacardx.framework.util.intx |
| javacardx.io |
| javacardx.security |
| javacardx.servlet.http |
| javax.microedition.io |
| javax.microedition.pki |
| javax.servlet |
| javax.servlet.http |

| Index | Größe | Einzelwort |
| --- | --- | --- |
| 00 | 04 | java |
| 01 | 02 | io |
| 02 | 04 | lang |
| 03 | 10 | annotation |
| 04 | 03 | rmi |
| 05 | 08 | security |
| 06 | 04 | util |
| 07 | 08 | javacard |
| 08 | 09 | framework |
| 09 | 07 | service |
| 10 | 09 | javacardx |
| 11 | 04 | apdu |
| 12 | 08 | biometry |
| 13 | 06 | crypto |
| 14 | 08 | external |
| 15 | 10 | facilities |
| 16 | 04 | math |
| 17 | 03 | tlv |
| 18 | 04 | intx |
| 19 | 07 | servlet |
| 20 | 04 | http |
| 21 | 05 | javax |
| 22 | 12 | microedition |
| 23 | 03 | pki |

| Elemente | Bezeichner |
| --- | --- |
| 02 | 00 01 |
| 02 | 00 02 |
| 03 | 00 02 03 |
| 02 | 00 04 |
| 02 | 00 05 |
| 02 | 00 06 |
| 02 | 07 08 |
| 03 | 07 08 09 |
| 02 | 07 05 |
| 02 | 10 11 |
| 02 | 10 12 |
| 02 | 10 13 |
| 02 | 10 14 |
| 02 | 10 15 |
| 02 | 10 08 |
| 03 | 10 08 16 |
| 03 | 10 08 17 |
| 03 | 10 08 06 |
| 04 | 10 08 06 18 |
| 02 | 10 01 |
| 02 | 10 05 |
| 03 | 10 19 20 |
| 03 | 21 22 01 |
| 03 | 21 22 23 |
| 02 | 21 19 |
| 03 | 21 19 20 |

Figur 7

```
HttpSession                       => Http Session
HttpSessionAttributeListener      => Http Session Attribute Listener
HttpSessionBindingEvent           => Http Session Binding Event
HttpSessionBindingListener        => Http Session Binding Listener
HttpSessionEvent                  => Http Session Event
HttpSessionListener               => Http Session Listener
ConstructedBERTag                 => Constructed BER Tag
ConstructedBERTLV                 => Constructed BERTLV
KoreanSEEDKey                     => Korean SEED Key
RSAPrivateCrtKey                  => RSA Private Crt Key
RSAPrivateKey                     => RSA Private Key
RSAPublicKey                      => RSA Public Key
```

## Figur 8

```
HttpSession                       0123
HttpSessionAttributeListener      7843
HttpSessionBindingEvent           5498
HttpSessionBindingListener        3321
HttpSessionEvent                  9845
HttpSessionListener               4561
```

## Figur 9

```
Index   Länge des Wortes     Bezeichner
[0]        04                Http
[1]        07                Session
[2]        09                Attribute
[3]        08                Listener
[4]        07                Binding
[5]        05                Event
```

## Figur 10

```
Index   Anzahl der Wörter      Komprimierte Bezeichner
[0]        02                  0000 0001
[1]        04                  0000 0001 0002 0003
[2]        04                  0000 0001 0004 0005
[3]        04                  0000 0001 0004 0003
[4]        03                  0000 0001 0005
[5]        03                  0000 0001 0003
```

Figur 11

**EP 2 517 105 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000259425 A